# EUROPÄISCHE PATENTSCHRIFT

(11) **EP 1 196 357 B1**
(45) Veröffentlichungstag und Bekanntmachung des Hinweises auf die Patenterteilung: **01.10.2003**
(21) Anmeldenummer: 00936522.2
(22) Anmeldetag: 17.05.2000
(51) Int. Cl.: C03B 29/10, C03B 29/08, C03B 29/12

(54) **VORRICHTUNG ZUM AUFHEIZEN VON GLASTAFELN**
DEVICE FOR HEATING PLATES OF GLASS
DISPOSITIF DESTINE A CHAUFFER DES PLAQUES DE VERRE

(30) Priorität: 17.05.1999 AT 87299; 25.06.1999 AT 112099
(43) Veröffentlichungstag der Anmeldung: 17.04.2002
(73) Patentinhaber: Tecnopat AG, 9008 St. Gallen (CH)
(72) Erfinder: Lisec, Peter, 3363 Amstetten-Hausmening (AT)
(74) Vertreter: Beer, Manfred, Dipl.-Ing.
(86) Internationale Anmeldenummer: AT0000135
(87) Internationale Veröffentlichungsnummer: WO00069781

(56) Entgegenhaltungen:
- WO-A-97/34844
- AT-B- 399 335
- BE-A- 561 134
- FR-A- 1 407 725
- US-A- 2 262 545
- US-A- 2 875 994
- US-A- 3 637 362
- US-A- 3 809 542
- US-A- 3 844 757
- US-A- 4 200 446
- US-A- 4 336 442

## Beschreibung

Die Erfindung betrifft eine Vorrichtung zum Aufheizen von Glastafeln, z.B. im Zuge des Härtens von Glastafeln oder zum Erwärmen von Glastafeln, wenn Glastafeln zu biegen sind, mit den Merkmalen des einleitenden Teils von Anspruch 1.

Glastafeln werden dadurch gehärtet, daß sie auf eine Temperatur über der Härtetemperatur von annähernd 600 bis 800°C erhitzt und dann auf eine Temperatur, die unter der kritischen Temperatur, z.B. unter 300°C liegt, abgeschreckt werden, so daß im Glas härtende Spannungen entstehen.

Eine Vorrichtung zum Härten von Glastafeln, in der Glastafeln vorgewärmt, erhitzt und dann durch Abschrecken gehärtet werden, ist aus der WO 97/34844 A bekannt.

Aus der BE-A-561 134 ist es bei einer Vorrichtung zum Aufheizen von einseitig beschichteten Glastafeln bekannt, bei der durch einen einseitig zwischen einer Wärmequelle und der Glastafel angeordneten Schirm oder durch unterschiedliche Schirme auf beiden Seiten der Glastafel zwischen beidseitig angeordneten Wärmequellen eine unterschiedliche Erwärmung der Glastafeln angestrebt wird. Als Werkstoff für den oder die zwischen der Glastafel und der oder den Heizeinrichtungen angeordneten Schirme sind in der BE-A-561 134 neben Metallen, Metallgeweben oder gelochten Blechen auch Schirme aus hitzebeständigen Keramiken bekannt.

Aus dem Chambers Dictionnary of Science and Technology Revised Edition 1974, Seite 989, ist es bekannt, dass hitzebeständiges keramisches Material aus Silikat oder Aluminat oder einer Kombination von Silikat und Aluminat bestehen kann.

Aus der US-A-3 637 362 ist es bekannt, von unten auf Rollen abgestützte Glastafeln einseitig durch ein Gaskissen abzustützen, wobei auf eine besondere Ausbildung der Austrittsöffnungen für das das Gaskissen bildende Gas Augenmerk gelegt wird.

Der Erfindung liegt die Aufgabe zugrunde, eine Vorrichtung der eingangs genannten Gattung zur Verfügung zu stellen, die als Vorwärmzone oder insbesondere als Heizzone in Anlagen zum Härten und/oder Biegen von Glas verwendet werden kann.

Gelöst wird diese Aufgabe erfindungsgemäß mit einer Vorrichtung, welche die Merkmale des unabhängigen Anspruchs 1 aufweist.

Bevorzugte und vorteilhafte Ausgestaltungen der Vorrichtung gemäß der Erfindung sind Gegenstand der Unteransprüche.

Dank der erfindungsgemäßen Ausbildung der Vorrichtung zum Aufheizen von Glastafeln ergibt sich ein gleichmäßiges Erwärmen der Glastafeln, wobei der Vorteil insbesondere dadurch erreicht wird, daß die wenigstens eine der Heizplatte aus keramischem Werkstoff besteht, so daß insbesondere am Beginn des Aufheizens einer Glastafel örtliche Temperaturunterschiede vermieden werden.

In einer Ausführungsform der Erfindung kann zwischen der Heizeinrichtung und der Heizplatte, die der zu erwärmenden oder aufzuheizenden Glastafel benachbart ist, eine Ausgleichsplatte vorgesehen sein, die aus metallischem und/oder keramischem Werkstoff bestehen kann. Wenn eine solche Ausgleichsplatte vorgesehen ist, wird die Heizplatte durch die ihr zugeordnete Heizeinrichtung gleichmäßig erwärmt. Dadurch wird auch die Glastafel gleichmäßig, insbesondere durch Strahlung erwärmt und thermische Spannungen in der Glastafel (wegen ungleichmäßiger Erwärmung derselben) und demzufolge Sprünge in der Glastafel werden vermieden.

Da in den Heizplatten der erfindungsgemäßen Vorrichtung zusätzlich Löcher vorgesehen sind, durch die von der Rückseite der Heizplatten zugeführtes, erhitztes Gas, insbesondere Luft, auf die Glastafel hin strömt, erfolgt das Aufheizen der Glastafel besonders wirksam, da auf diese Wärme nicht nur durch Strahlung (Heizplatten), sondern auch durch Konvektion (Gas) übertragen wird.

Die erfindungsgemäße Vorrichtung umfasst zwei im Abstand voneinander angeordnete Heizplatten, zwischen welchen die aufzuheizenden Glastafeln einzuführen sind.

Wenn die Heizplatte oder die Heizplatten nicht horizontal ausgerichtet sind, kann am unteren Ende der Heizplatte bzw. des Raumes zwischen den Heizplatten eine Stütz- und Transportvorrichtung für aufzuheizende Glastafeln vorgesehen sein.

Die Heizplatten können unter einem Winkel von 30 bis 40° zur Vertikalen ausgerichtet sein. Die Schrägstellung der Heizplatten kann auch veränderbar sein.

Der Werkstoff (Oxid-Keramik), aus dem die die erfindungsgemäßen Heizplatten bestehen, besitzt einen hohen Abstrahlungskoeffizienten. Beispiele für Werkstoffe aus Oxid-Keramik sind Werkstoffe auf Basis von Silikat und/oder Aluminiumoxid. Bevorzugt bestehen die erfindungsgemäß vorgesehenen Heizplatten aus einem keramischen Werkstoff, der Silikat und Aluminiumoxid enthält.

Weitere Einzelheiten, Vorteile und Merkmale der Erfindung ergeben sich aus der nachstehenden Beschreibung der in den Zeichnungen schematisch im lotrechten Schnitt dargestellten Ausführungsbeispiele der Erfindung.

Es zeigt:
Fig. 1 ein erstes Ausführungsbeispiel und
Fig. 2 ein zweites Ausführungsbeispiel.

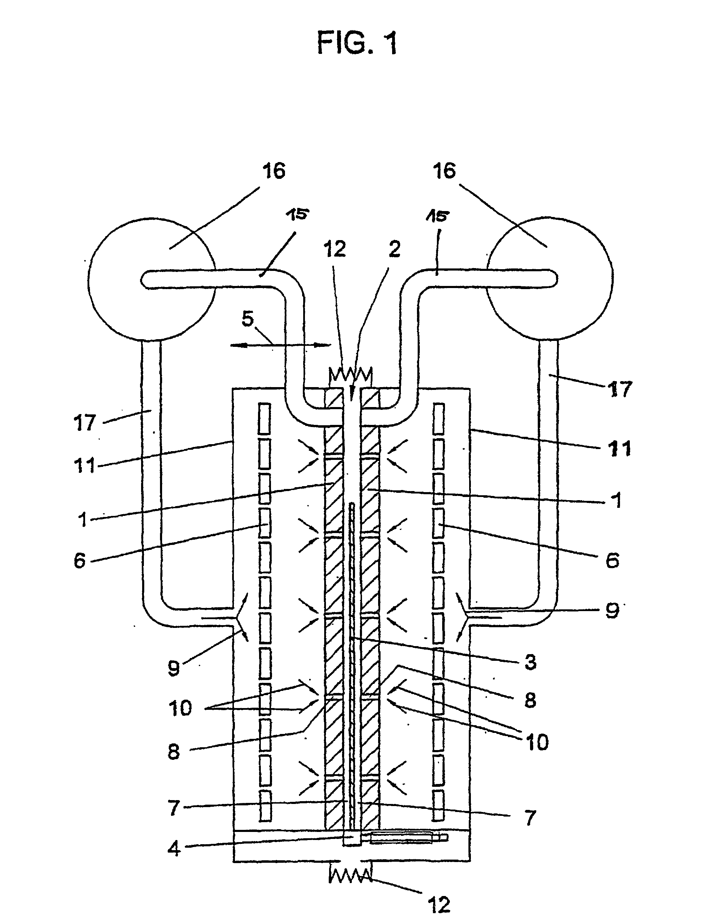

Bei der in Fig. 1 dargestellten Ausführungsform umfaßt die erfindungsgemäße Vorrichtung zwei zueinander parallel ausgerichtete Heizplatten 1 aus keramischem Werkstoff mit hohem Koeffizienten für die Abstrahlung von Wärmestrahlen. Die Heizplatten 1 sind im gezeigten Ausführungsbeispiel gegenüber der Vertikalen um wenige Grade geneigt. Sie können aber auch flacher stehen, oder horizontal ausgerichtet sein. Weiters besteht die Möglichkeit die Heizplatten 1 so zu halten, daß deren Neigung geändert werden kann, um die Vorrichtung den jeweiligen Gegebenheiten anpassen zu können.

Eine vorzuwärmende oder aufzuheizende Glastafel 3 wird von einer beliebig ausgebildeten Stütz- und Fördereinrichtung 4 in den Raum 2 zwischen den Heizplatten 1 bewegt.

Der Abstand der Heizplatten 1 voneinander ist veränderbar (Pfeil 5), so daß der Abstand der Heizplatten 1 voneinander an die Dicke der aufzuheizenden Glasplatte 3 angepaßt werden kann. In der Regel werden die Heizplatten 1 möglichst nahe der aufzuheizenden Glastafel 3 angeordnet sein.

Den Heizplatten 1 sind auf ihrer, von dem Raum 2, in dem eine Glastafel 3 angeordnet ist, abgekehrten Seite Heizeinrichtungen 6, beispielsweise gasbeheizte oder elektrische Heizeinrichtungen 6 in Form von Heizstäben, Heizplatten oder Heizwendeln zugeordnet, mit welchem die Heizplatten 1 beheizt werden. Die erhitzten Heizplatten 1 geben Wärme, insbesondere durch Strahlung, an die vorzuwärmende oder aufzuheizende Glastafel 3 ab, um sie vorzuwärmen oder um sie beispielsweise auf eine Temperatur über der Härtetemperatur oder auf eine Temperatur bei der sie verformt (gebogen) werden können, zu erhitzen.

Zusätzlich ist die Vorrichtung so ausgebildet, daß auf beiden Seiten der Glastafel 3 zwischen den Heizplatten 1 ein die Glastafel beidseitig stützendes Gaskissen 7 ausgebildet werden kann, um die Glastafel 3 zwischen den Heizplatten 1 sicher zu führen und um zu verhindern, daß die Glastafel 3 die eine oder die andere Heizplatte 1 berührt.

Hiezu sind in den Heizplatten 1 Löcher 8 vorgesehen, so daß von der Rückseite der Heizplatten 1 her zugeführtes Gas (Pfeile 9) durch die Löcher 8 in den Raum 2 strömt (Pfeile 10) und beidseits der Glastafel 3 Gaskissen 7 ausbildet.

Vorteilhaft ist dabei, daß das zugeführte und die Gaskissen 7 zwischen der Glastafel 3 und den Heizplatten 1 bildende Gas (meist Luft) durch die Heizeinrichtungen 6 erhitzt wird. So wird auf die aufzuheizende Glastafel 3 Wärme nicht nur durch von den Heizplatten 1 abgegebene Wärmestrahlung, sondern auch durch Konvektion übertragen.

Bevorzugt ist es, wenn die Heizeinrichtungen 6 in an den Rückseiten der Heizplatten 1 vorgesehenen Gehäusen 11 untergebracht sind, die mit dem die Gaskissen 7 bildenden Gas beaufschlagt werden. So sind Wärmeverluste weitestgehend vermieden, da Gas nur durch die Löcher 8 in den Heizplatten 1 in den Raum 2 strömen kann.

In der bevorzugten, in Fig. 1 schematisch und beispielhaft gezeigten Ausführungsform wird das Gas für die Gaskissen 7 den Gehäusen 11 so zugeführt, daß es durch die Heizeinrichtungen 6 strömen muß, bevor es zu den Löchern 8 in den Heizplatten 1 gelangt. So wird das Gas besonders wirksam erhitzt.

Aus dem Raum 2 zwischen den Heizplatten 1 abströmendes Gas kann im Kreislauf geführt werden. Beispielsweise wird abströmendes Gas im Bereich des oberen Endes des Raumes 2 über Leitungen 15 durch die Heizplatten 1 abgezogen und den Gehäusen 11 durch Gebläse 16 od. dgl. über Leitungen 17 wieder zugeführt.

Um Verluste an Gas zu vermeiden, ist der Raum 2 zwischen den Heizplatten 1 oben und unten durch längenveränderbare, z.B. elastische oder gefaltete Dichtungen 12 abgeschlossen. Die etwa lotrechten seitlichen Ränder des Raumes 2 können durch für den Antransport einer aufzuheizenden und für den Abtransport einer aufgeheizten Glastafel 3 wegklapp- oder wegziehbare Dichtungen geschlossen sein.

Mit Vorteil ist die Transport- und Stützeinrichtung 4 am unteren Rand der Heizplatten 1 gekapselt, so daß die Transportund Stützeinrichtung nicht gasdicht sein braucht. Beispielsweise ist die Transport- und Stützeinrichtung 4 in dem in der Zeichnung gezeigten Ausführungsbeispiel in einer Kammer am unteren Rand der Gehäuse 11 untergebracht.

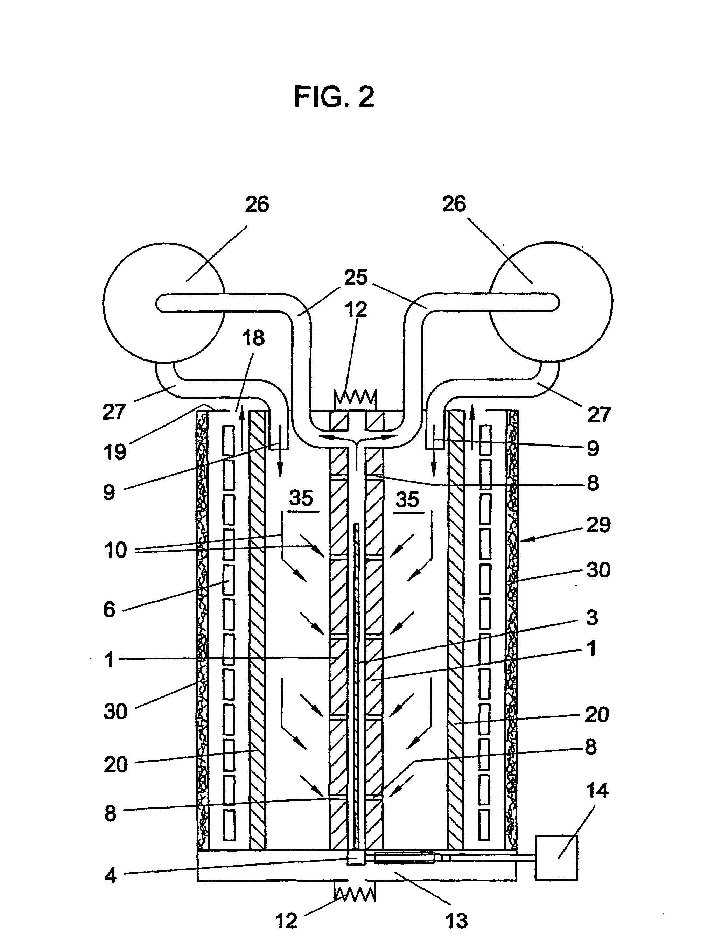

Auch die in Fig. 2 dargestellte Ausführungsform einer Vorrichtung gemäß der Erfindung umfaßt zwei zueinander parallel ausgerichtete Heizplatten 1 aus keramischem Werkstoff mit hohem Koeffizienten für die Abstrahlung von Wärmestrahlen. Die Heizplatten 1 können gegenüber der Lotrechten um bis zu 30 oder 40° geneigt sein. Sie können aber auch steiler oder flacher stehen, oder horizontal ausgerichtet sein. Weiters besteht auch bei der Ausführungsform von Fig. 2 die Möglichkeit, die Neigung der Heizplatten 1 zu ändern, um die Vorrichtung den jeweiligen Gegebenheiten anpassen zu können.

Zwischen den Heizplatten 1 und den Heizeinrichtungen 6 sind bei der Ausführungsform von Fig. 2 zu den Heizplatten 1 parallele Ausgleichsplatten 20 vorgesehen. Die Ausgleichsplatten 20, die aus metallischem und/oder keramischem Werkstoff bestehen können, werden von den Heizeinrichtungen 6 beheizt und geben Wärme durch Strahlung gleichmäßig, d.h. weitgehend ohne örtliche Temperaturunterschiede, an die Heizplatten 1 ab. Dies, auch wenn die Heizeinrichtungen 6 die Ausgleichsplatten 20 nicht gleichmäßig beheizen, beispielsweise wenn Heizstäbe, -wendeln oder (gasbetriebene) Heizstrahler als Heizeinrichtungen 6 dienen.

Bevorzugt ist es, wenn die Heizeinrichtungen 6 in an den Rückseiten der Heizplatten 1 vorgesehenen Gehäusen 11 untergebracht sind, in denen auch die Ausgleichsplatten 20 angeordnet sind. Die Gehäuse 11 werden mit dem die Gaskissen 7 bildenden Gas beaufschlagt. So sind Wärmeverluste weitestgehend vermieden, da Gas nur durch die Löcher 8 in den Heizplatten 1 in den Raum 2, in dem eine Glastafel 3 steht, strömen kann.

Wenn die Heizeinrichtungen 6 gasbetrieben sind, sind in den oberen Endwänden 19 der Gehäuse 11 Abgasöffnungen 18 vorgesehen.

In der bevorzugten in Fig. 2 schematisch und beispielhaft gezeigten Ausführungsform wird das Gas für die Gaskissen 7 den Gehäusen 11 so zugeführt, daß es in die Räume 35 zwischen den Ausgleichsplatten 20 und den Heizplatten 1 strömt, um zu den Löchern 8 in den Heizplatten 1 zu gelangen. So wird ein besonders wirksames Aufheizen des Gases erreicht.

Aus dem Raum 2 zwischen den Heizplatten 1 abströmendes Gas kann im Kreislauf geführt werden. Beispielsweise wird abströmendes Gas durch die Heizplatten 1 oben durchsetzende Leitungen 25 abgezogen und den Gehäusen 11 durch Gebläse 26 od. dgl. über Leitungen 27 wieder zugeführt.

Die Gehäuse 11 können bei beiden Ausführungsformen teilweise oder zur Gänze mit einer wärmedämmenden Lage isoliert sein, wie dies in dem in Fig. 2 gezeigten Ausführungsbeispiel für die seitlichen Wände 29 durch Isolierlagen 30 verwirklicht ist.

Wenngleich im Rahmen der Erfindung bevorzugt ist, daß die wenigstens eine Heizplatte 1 und/oder die wenigstens eine Ausgleichsplatte 20 aus keramischem Werkstoff besteht, kann die Ausgleichsplatte 20 auch aus einem anderen hitzebeständigen Werkstoff, beispielsweise Metall, insbesondere Stahl, bestehen. Wesentlich für die Ausgleichsplatte 20 ist, daß sie über ihre der Heizplatte 1 zugewendete Fläche Wärme gleichmäßig (durch Strahlung) an die Heizplatte 1 abgibt, damit diese eine möglichst gleichmäßige Temperatur besitzt und Wärme gleichmäßig abstrahlt.

Zusammenfassend kann ein Ausführungsbeispiel der Erfindung wie folgt dargestellt werden:

Eine Vorrichtung zum Aufheizen von Glastafeln 3 zum Härten oder Verformen besitzt zwei Heizplatten 1, zwischen denen die Glastafel 3 angeordnet wird. Den Heizplatten 1 sind mit Abstand Ausgleichsplatten 20 und neben diesen Heizungen 6 zugeordnet. Die Heizungen 6 sind in Gehäusen 11 untergebracht, die auf einer Seite von den Heizplatten 1 begrenzt werden. In den Heizplatten 1 sind Löcher 8 vorgesehen, aus denen den Gehäusen 11 zwischen den Heizplatten 1 und den Ausgleichsplatten 20 zugeführtes Gas, das durch Vorbeiströmen an den Ausgleichsplatten 20 erhitzt wird, ausströmt und beidseits der Glastafel 3, diese stützende Gaskissen 7 bildet.

So wird die Glastafel 3 durch Strahlung und durch Konvektion gleichmäßig erhitzt.

## Patentansprüche

1. Vorrichtung zum Aufheizen von Glastafeln (3) mit zwei einander gegenüberliegenden und zueinander parallel ausgerichteten beheizten Platten (1), welche Platten (1) zwischen sich einen Raum (2) für die aufzuheizende Glastafel (3) begrenzen, wobei auf den von der Glastafel (3) abgekehrten Rückseiten der Platten (1) Heizeinrichtungen (6) vorgesehen sind, **dadurch gekennzeichnet, daß** die Platten (1) aus Oxid-Keramik bestehen, daß in den Platten (1) Löcher (8) vorgesehen sind, die zwecks Ausbildung eines Gaskissens (7) zwischen der aufzuheizenden Glastafel (3) und den Platten (1) mit unter Druck stehendem Gas beaufschlagbar sind, daß die Heizeinrichtungen (6) in an den von der Glastafel (3) abgekehrten Rückseiten der Platten (1) angeordneten Gehäusen (11) angeordnet sind, und daß die Gehäuse (11) mit Gas (9) beaufschlagt werden, das durch die Löcher (8) in den Platten (1) austritt.

2. Vorrichtung nach Anspruch 1, **dadurch gekennzeichnet, daß** der Werkstoff der Platten (1) ein Werkstoff mit hohem Abstrahlungskoeffizienten ist.

3. Vorrichtung nach Anspruch 1 oder 2, **dadurch gekennzeichnet, daß** der Werkstoff, aus dem die Platten (1) bestehen, eine Silikat und/oder Aluminiumoxid enthaltende Keramik ist.

4. Vorrichtung nach einem der Ansprüche 1 bis 3, **dadurch gekennzeichnet, daß** zwischen den Heizplatten (1) und den Heizeinrichtungen (6) Ausgleichsplatten (20) vorgesehen sind.

5. Vorrichtung nach Anspruch 4, **dadurch gekennzeichnet, daß** die Ausgleichsplatten (20) aus metallischem und/oder keramischem Werkstoff bestehen.

6. Vorrichtung nach Anspruch 4 oder 5, **dadurch gekennzeichnet, daß** der Werkstoff, aus dem die Ausgleichsplatten (20) bestehen, eine Oxid-Keramik, insbesondere eine Silikat und/oder Aluminiumoxid enthaltende Keramik ist.

7. Vorrichtung nach einem der Ansprüche 4 bis 6, **dadurch gekennzeichnet, daß** die Ausgleichsplatten (20) in den an der Rückseite der Platten (1) angeordneten Gehäusen (11) untergebracht sind.

8. Vorrichtung nach einem der Ansprüche 1 bis 7, **dadurch gekennzeichnet, daß** die Platten (1) und gegebenenfalls die Ausgleichsplatten (20) unter einem spitzen Winkel zur Lotrechten ausgerichtet sind.

9. Vorrichtung nach einem der Ansprüche 1 bis 8, **dadurch gekennzeichnet, daß** die Neigung der Platten (1) und gegebenenfalls die der Ausgleichsplatten (20) veränderbar ist.

10. Vorrichtung nach einem der Ansprüche 1 bis 9, **dadurch gekennzeichnet, daß** am unteren Rand der Platten (1) eine Transport- und Stützvorrichtung (4) für Glastafeln (3) vorgesehen ist.

11. Vorrichtung nach einem der Ansprüche 1 bis 10, **dadurch gekennzeichnet, daß** mit Abstand von den Platten (1) zwei, zu diesen parallele Ausgleichsplatten (20) vorgesehen sind.

12. Vorrichtung nach einem der Ansprüche 1 bis 11, **dadurch gekennzeichnet, daß** wenigstens eine der beiden Platten (1) relativ zur anderen Heizplatte (1) verstellbar ist (5).

13. Vorrichtung nach einem der Ansprüche 1 bis 12, **dadurch gekennzeichnet, daß** die Heizeinrichtungen (6) mit Abstand von den Platten (1) angeordnet ist.

14. Vorrichtung nach einem der Ansprüche 1 bis 13, **dadurch gekennzeichnet, daß** der Raum (2) zwischen den Platten (1) im Bereich der Ränder der Platten (1) abgeschlossen ist.

15. Vorrichtung nach einem der Ansprüche 1 bis 14, **dadurch gekennzeichnet, daß** an den in Förderrichtung der Glastafeln (3) verlaufenden Rändern der Platten (1) längenveränderliche Dichtungen, z.B. zick-zack-gefaltete Dichtungen (12), vorgesehen sind.

16. Vorrichtung nach einem der Ansprüche 1 bis 15, **dadurch gekennzeichnet, daß** an den seitlichen, quer zur Förderrichtung der Glastafeln (3) verlaufenden Rändern der Platten (1) verstellbare Dichtungen vorgesehen sind.

17. Vorrichtung nach einem der Ansprüche 1 bis 16, **dadurch gekennzeichnet, daß** Gas für das Ausbilden der Gaskissen (7) durch auf von den Platten (1) abgewendeten Seite der Heizeinrichtungen (6) mündenden Leitungen (17) in die Gehäuse (11) eingeleitet wird.

18. Vorrichtung nach einem der Ansprüche 1 bis 17, **dadurch gekennzeichnet, daß** aus dem Raum (2) zwischen den Platten (1) Gas abgesaugt und den Gehäusen (11) wieder zugeführt wird.

19. Vorrichtung nach Anspruch 18, **dadurch gekennzeichnet, daß** wenigstens ein Gebläse (26) vorgesehen ist, das saugseitig (Leitung 25) an den Raum (2) zwischen den Platten (1) und druckseitig (Leitung 27) an den Raum (35) zwischen den Platten (1) und den Ausgleichsplatten (20) angeschlossen ist.

20. Vorrichtung nach Anspruch 19, **dadurch gekennzeichnet, daß** vom oberen Ende des Raumes (2) zwischen den Platten (1) wenigstens eine Leitung (15) ausgeht, die zur Saugseite eines Gebläses (16) führt, das druckseitig mit den Leitungen (17) zum Zuführen von Gas in die Gehäuse (11) verbunden ist.

21. Vorrichtung nach einem der Ansprüche 4 bis 20, **dadurch gekennzeichnet, daß** das die Löcher (8) in den Platten (1) beaufschlagende Gas dem Raum (35) zwischen den Platten (1) und den Ausgleichsplatten (20) zugeführt wird.

22. Vorrichtung nach einem der Ansprüche 10 bis 21, **dadurch gekennzeichnet, daß** die Transport- und Stützeinrichtung (4) innerhalb der Gehäuse (11) angeordnet ist.

23. Vorrichtung nach Anspruch 22, **dadurch gekennzeichnet, daß** die Transport- und Stützeinrichtung (4) in einer Kammer (13) am unteren Ende der Gehäuse (11) untergebracht ist.

24. Vorrichtung nach Anspruch 23, **dadurch gekennzeichnet, daß** der Antrieb (14) für die Transport- oder Stützeinrichtung (4) seitlich neben dem einen der Gehäuse (11) und außerhalb der Kammer (13) angeordnet ist.

## Claims

1. Device for heating glass plates (3) with two heated plates (1), which are situated opposite each other and aligned parallel to each other, which plates (1) delimit between them a space (2) for the glass plate (3) to be heated, heating devices (6) being provided on the rear sides of the plates (1) orientated away from the glass plate (3), **characterised in that** the plates (1) are made of oxide ceramic, **in that** holes (8) are provided in the plates (1) which can be supplied with gas which is under pressure for the purpose of forming a gas cushion (7) between the glass plate (3) to be heated and the plates (1), **in that** the heating devices (6) are disposed in housings (11) disposed on the rear sides of the plates (1) orientated away from the glass plate (3), and **in that** the housings (11) are supplied with gas (9) which discharges through the holes (8) in the plates (1).

2. Device according to claim 1, **characterised in that** the material of the plates (1) is a material with a high radiation coefficient.

3. Device according to claim 1 or 2, **characterised in that** the material from which the plates (1) are made is a ceramic containing silicate and/or aluminium oxide.

4. Device according to one of the claims 1 to 3, **characterised in that** equalising plates (20) are provided between the heating plates (1) and the heating devices (6).

5. Device according to claim 4, **characterised in that** the equalising plates (20) are made of metallic and/or ceramic material,

6. Device according to claim 4 or 5, **characterised in that** the material, from which the equalising plates (20) are made, is an oxide ceramic, in particular a ceramic containing silicate and/or aluminium oxide.

7. Device according to one of the claims 4 to 6, **characterised in that** the equalising plates (20) are accommodated in the housings (11) disposed on the rear side of the plates (1).

8. Device according to one of the claims 1 to 7, **characterised in that** the plates (1) and possibly the equalising plates (20) are aligned at an acute angle to the vertical.

9. Device according to one of the claims 1 to 8, **characterised in that** the inclination of the plates (1) and possibly that of the equalising plates (20) is variable.

10. Device according to one of the claims 1 to 9, **characterised in that** a transport and support device (4) for glass plates (3) is provided at the lower edge of the plates (1).

11. Device according to one of the claims 1 to 10, **characterised in that**, at a spacing from the plates (1), two equalising plates (20) are provided parallel to these plates.

12. Device according to one of the claims 1 to 11 **characterised in that** at least one of the two plates (1) is displaceable (5) relative to the other heating plate (1).

13. Device according to one of the claims 1 to 12, **characterised in that** the heating devices (6) is disposed at a spacing from the plates (1).

14. Device according to one of the claims 1 to 13, **characterised in that** the space (2) between the plates (1) is sealed in the region of the edges of the plates (1).

15. Device according to one of the claims 1 to 14, **characterised in that**, at the edges of plates (1) extending in the conveying direction of the glass plates (3), longitudinally variable seals, for example seals (12) folded in a zig-zag, are provided.

16. Device according to one of the claims 1 to 15, **characterised in that** adjustable seals are provided at the side edges extending transversely relative to the conveying direction of the glass plates (3).

17. Device according to one of the claims 1 to 16, **characterised in that** gas for forming the gas cushions (7) is. introduced into the housings (11) through pipes (17) discharging on the side of the heating devices (6) orientated away from the plates (1).

18. Device according to one of the claims 1 to 17, **characterised in that** gas is removed by suction from the space (2) between the plates (1) and is supplied again to the housings (11).

19. Device according to claim 18, **characterised in that** at least one fan (26) is provided which is connected on the suction side (pipe 25) to the space (2) between the plates (1) and on the pressure side (pipe 27) to the space (35) between the plates (1) and the equalising plates (20).

20. Device according to claim 19, **characterised in that** at least one pipe (15) issues from the upper end of the space (2) between the plates (1) and leads to the suction side of a fan (16) which is connected on the pressure side to the pipes (17) for supplying gas into the housings (11).

21. Device according to one of the claims 4 to 20, **characterised in that** the gas impinging on the holes (8) in the plates (1) is supplied to the space (35) between the plates (1) and the equalising plates (20).

22. Device according to one of the claims 10 to 21, **characterised in that** the transport and support device (4) is disposed within the housings (11).

23. Device according to claim 22, **characterised in that** the transport and support device (4) is accommodated in a chamber (13) at the lower end of the housings (11).

24. Device according to claim 23, **characterised in that** the drive (14) for the transport or support device (4) is disposed laterally next to the one of the housings (11) and externally of the chamber (13).

## Revendications

1. Dispositif pour le chauffage de feuilles de verre (3) comportant deux plaques (1) chauffées, disposées mutuellement en vis-à-vis et mutuellement parallèles, qui définissent entre elles une chambre (2) pour les feuilles de verre (3) à réchauffer, des dispositifs de chauffage (6) étant prévus sur les faces postérieures des plaques (1), éloignées de la feuille de verre (1), **caractérisé en ce que** les plaques sont en céramique oxydée, **en ce qu'**il est prévu dans les plaques (1) des trous (8), qui peuvent être alimentés avec du gaz sous pression aux fins de former un coussin de gaz (7) entre la feuille de verre (3) à réchauffer et les plaques (1), **en ce que** les dispositifs de chauffage (6) sont disposés dans des carters (11) placés sur les faces postérieures des plaques (1) éloignées de la feuille de verre (3) et **en ce que** les carters (11) sont alimentés avec du gaz (9) qui s'échappe par les trous (8) dans les plaques (1).

2. Dispositif selon la revendication 1, **caractérisé en ce que** le matériau des plaques (1) est un matériau à coefficient de rayonnement élevé.

3. Dispositif selon la revendication 1 ou 2, **caractérisé en ce que** le matériau dont sont constituées les plaques (1) est une céramique contenant du silicate et/ou de l'oxyde d'aluminium.

4. Dispositif selon une des revendications 1 à 3, **caractérisé en ce que** des plaques égalisatrices (20) sont prévues entre les plaques chauffantes (1) et les dispositifs de chauffage (6).

5. Dispositif selon la revendication 4, **caractérisé en ce que** les plaques égalisatrices (20) sont réalisées en un matériau métallique et/ou céramique.

6. Dispositif selon la revendication 4 ou 5, **caractérisé en ce que** le matériau dont sont constituées les plaques égalisatrices (20) est une céramique oxydée, en particulier une céramique contenant du silicate et/ou de l'oxyde d'aluminium.

7. Dispositif selon une des revendications 4 à 6, **caractérisé en ce que** les plaques égalisatrices (20) sont logées dans les carters (11) placés sur les faces postérieures des plaques (1).

8. Dispositif selon une des revendications 1 à 7, **caractérisé en ce que** les plaques (1) et le cas échéant les plaques égalisatrices (20) sont orientées suivant un angle aigu par rapport à la verticale.

9. Dispositif selon une des revendications 1 à 8, **caractérisé en ce que** l'inclinaison des plaques (1) et le cas échéant l'inclinaison des plaques égalisatrices (20) est variable.

10. Dispositif selon une des revendications 1 à 9, **caractérisé en ce qu'**il est prévu au niveau du bord inférieur des plaques (1) un dispositif de transport et d'appui (4) pour des feuilles de verre (3).

11. Dispositif selon une des revendications 1 à 10, **caractérisé en ce qu'**il est prévu à distance des plaques (1), deux plaques égalisatrices (20) qui sont parallèles à celles-ci.

12. Dispositif selon une des revendications 1 à 11, **caractérisé en ce qu'**au moins une des deux plaques (1) est réglable (5) par rapport à l'autre plaque chauffante (1).

13. Dispositif selon une des revendications 1 à 12, **caractérisé en ce que** les dispositifs de chauffage (6) sont disposés à distance des plaques (1).

14. Dispositif selon une des revendications 1 à 13, **caractérisé en ce que** la chambre (2) entre les plaques (1) est fermée dans la région des bords des plaques (1).

15. Dispositif selon une des revendications 1 à 14, **caractérisé en ce qu'**il est prévu sur les bords des plaques (1), qui s'étendent dans la direction de transport des feuilles de verre (3), des joints dont la longueur est variable, par exemple des joints (12) pliés en accordéon.

16. Dispositif selon une des revendications 1 à 15, **caractérisé en ce qu'**il est prévu sur les bords latéraux des plaques (1), qui s'étendent transversalement à la direction de transport des feuilles de verre (3), des joints réglables.

17. Dispositif selon une des revendications 1 à 16, **caractérisé en ce que** le gaz pour la formation du coussin de gaz (7) est introduit dans les carters (11) à l'aide de conduites (17) qui débouchent sur la face des dispositifs de chauffage (6) éloignée des plaques (1).

18. Dispositif selon une des revendications 1 à 17, **caractérisé en ce que** du gaz est aspiré de la chambre (2) entre les plaques et réintroduit dans les carters (11).

19. Dispositif selon la revendication 18, **caractérisé en ce qu'**il est prévu au moins une soufflante (26) qui est connectée, côté aspiration (conduite (25)), à la chambre (2) entre les plaques (1) et, côté refoulement (conduite (27)), à la chambre (35) entre les plaques (1) et les plaques égalisatrices (20).

20. Dispositif selon la revendication 19, **caractérisé en ce que** de l'extrémité supérieure de la chambre (2) entre les plaques (1) part au moins une conduite (15), qui mène au côté aspiration d'une soufflante (16) dont le côté refoulement est connecté aux conduites (17) pour l'amenée de gaz dans les carters (11).

21. Dispositif selon une des revendications 4 à 20, **caractérisé en ce que** le gaz qui alimente les trous (8) dans les plaques (1) est réintroduit dans la chambre (35) entre les plaques (1) et les plaques égalisatrices (20).

22. Dispositif selon une des revendications 10 à 21, **caractérisé en ce que** le dispositif de transport et d'appui (4) est disposé à l'intérieur des carters (11).

23. Dispositif selon la revendication 22, **caractérisé en ce que** le dispositif de transport et d'appui (4) est logé dans une chambre (13) à l'extrémité inférieure des carters (11).

24. Dispositif selon la revendication 23, **caractérisé en ce que** le mécanisme d'entraînement (14) pour le dispositif de transport et d'appui (4) est disposé latéralement à côté de l'un des carters (11) et à l'extérieur de la chambre (13).
